# EUROPÄISCHE PATENTSCHRIFT

(11) **EP 0 846 251 B1**
(45) Veröffentlichungstag und Bekanntmachung des Hinweises auf die Patenterteilung: **07.04.1999**
(21) Anmeldenummer: 96927040.4
(22) Anmeldetag: 18.07.1996
(51) Int. Cl.: G01C 15/06

(54) **MESSLATTE FÜR GEODÄTISCHE MESSAUFGABEN**
GEODESIC MEASURING STAFF
MIRE GRADUEE POUR MESURES GEODESIQUES

(30) Priorität: 22.08.1995 DE 19530788
(43) Veröffentlichungstag der Anmeldung: 10.06.1998
(73) Patentinhaber: Leica AG, CH-9435 Heerbrugg (CH)
(72) Erfinder: GÄCHTER, Bernhard, CH-9436 Balgach (CH); BRAUNECKER, Bernhard, CH-9445 Rebstein (CH)
(74) Vertreter: Stamer, Harald, Dipl.-Phys.
(86) Internationale Anmeldenummer: EP9603160
(87) Internationale Veröffentlichungsnummer: WO9708512

(56) Entgegenhaltungen:
- EP-A- 0 576 004
- DE-A- 3 424 806
- FR-A- 1 583 967

## Beschreibung

Die Erfindung betrifft eine Meßlatte für geodätische Meßaufgaben mit einer strichcodierten Meßteilung.

Meßlatten haben üblicherweise eine ebene Fläche als Codeträger. Dies hat seinen Grund darin, daß bei visueller Ablesung die Zahlenangaben und die Teilungsstriche der Maßverkörperung nebeneinander stehen. Beim Digital-Nivellieren sind die Höhenangaben über einen Strichcode verschlüsselt. Auch hier sind Codes üblich, die aus nebeneinander stehenden Codezeichen aufgebaut sind, um eine Grob- und eine Feinablesung zu ermöglichen. Neuere Meßlatten enthalten eine Strichcode, der einreihig aufgebaut ist.

Ein symmetrisch zur Visierrichtung eines Theodoliten liegender Ausschnitt des Strichcodes wird auf ein Sensor-Array oder eine Sensor-Matrix abgebildet und das Bild mit einem gespeicherten Referenzmuster (DE 34 24 806 C2) oder einer mathematischen Funktion (EP 0 576 004 A1) verglichen. Durch Korrelationsverfahren wird die beste Überdeckung von Bild- und Referenzmuster ermittelt. Wenn das Referenzmuster als Strichmuster gespeichert ist, muß auch das Bildmuster die Strichstruktur enthalten. Dies führt ebenfalls zu einer Aufbringung des Codes auf einer ebenen Lattenfläche.

Es sind auch laseroptische Nivelliersysteme bekannt, bei denen ein rotierender Laserstrahl ein auf der Meßlatte angebrachtes Codemuster abtastet (DE 33 21 990 A1). Das Codemuster besteht aus nebeneinander liegenden höhenversetzten Reflexionselementen. Damit alle Element die gleiche Reflexionscharakteristik aufweisen, müssen sie auf einer ebenen Fläche angebracht sein.

Eine ebene Codeträger-Fläche kommt auch den Herstellungsverfahren zum Aufbringen des Codes entgegen. Sowohl Druck- als auch Projektionsübertragungen des Codemusters auf einen ebenen Träger gehören zu Standard-Technologien.

Die Meßlatte muß üblicherweise von einer Hilfsperson so gehalten werden, daß sie senkrecht zur Visierrichtung des Theodoliten steht. Verdrehungen und Verkippungen in der Größe von 10 - 15° gegenüber der Meßrichtung führen zu nicht vemachlässigbaren Fehlern aufgrund perspektivischer Verzerrungen des abgebildeten Codemusters. Soll die Meßlatte von unterschiedlichen Standorten eines Theodoliten anvisiert werden, so muß sie richtungsmäßig nachgeführt werden, wobei jedesmal neue Dreh- und/oder Kippfehler auftreten.

Eine elektronische Meßlatte zur geodätischen Höhenübertragung, die gleichzeitig aus drei diskreten Richtungen anvisiert werden kann, ist aus dem Deutschen Gebrauchsmuster G 86 17 666.8 bekannt. Die Meßlatte weist einen runden Querschnitt auf, der in drei Hohlkammem zur Aufnahme elektronischer Leitungen und Bauelemente aufgeteilt ist. Auf der Außenfläche jeder der Hohlkammem sind in Längsrichtung der Meßlatte jeweils Reihen von Solarzellen angeordnet, die mit einem Laserstrahl anvisiert werden und dann ein Signal abgeben, wenn sie vom Laserstrahl getroffen werden. Jede Solarzellenreihe stellt ein von den anderen Reihen getrenntes Meßsystem dar.

Der Erfindung lag die Aufgabe zugrunde, eine Meßlatte mit strichcodierter Meßteilung anzugeben, die ohne manuelle Nachführung aus unterschiedlichen Richtungen anvisiert werden kann und wobei Neigungen der Meßlatte gegenüber der Lotrechten eindeutig erkannt werden können.

Diese Aufgabe wird bei einer Meßlatte der eingangs genannten Art erfindungsgemäß dadurch gelöst, daß der Körper der Meßlatte einen im wesentlichen rotationssymmetrischen Querschnitt aufweist, die Elemente der strichcodierten Meßteilung geschlossene Linien auf der Mantelfläche der Meßlatte bilden und dabei jeweils in einer Schnittebene senkrecht zur Längsachse der Meßlatte liegen. Der Querschnitt des Körpers kann vorteilhafterweise eine Kreisfläche bilden. Er kann aber auch ein Vieleck sein. Der Durchmesser des Lattenkörpers sollte vorzugsweise zwischen 6 und 10 cm liegen.

Die Erfindung macht sich die Erkenntnis zunutze, daß bei einer Abbildung der Meßlatte auf einer Detektor-Matrix, z.B. eines Video-Theodoliten, immer ein zentraler linienförmiger Bereich mit kontrastreicher Abbildung des Codemusters und nach links und rechts auslaufenden unscharfen Abbildungen der Code-Elemente entsteht. Durch entsprechende Abfrage der Detektorelemente kann die Auswertung auf das scharf abgebildete Codemuster begrenzt werden. Geringe Abweichungen von der Rotationssymmetrie des Querschnitts beeinträchtigen die Auswertegenauigkeit dabei nicht. Drehfehler relativ zur Meßrichtung treten aufgrund der rotationssymmmetrisch zusammenhängend angeordneten Codeelemente nicht auf. Verkippungen in Meßrichtung führen zu Stauchungen und Streckungen der Strichabstände und Strichstärken sowie systematischen Kontraständerungen im Bild des Codemusters, die erkannt und durch Korrekturrechnung nach Patentanmeldung P 44 38 759.8 berücksichtigt werden können. Neigungen quer zur Meßrichtung führen dazu, daß der scharf abgebildete linienförmige Bereich auch auf der Detektor-Matrix gegenüber einer vorgegebenen Geometrie der Detektor-Elemente geneigt ist. Auch dies kann durch entsprechende Abfrage der Detektor-Elemente ermittelt und bei der Auswertung berücksichtigt werden.

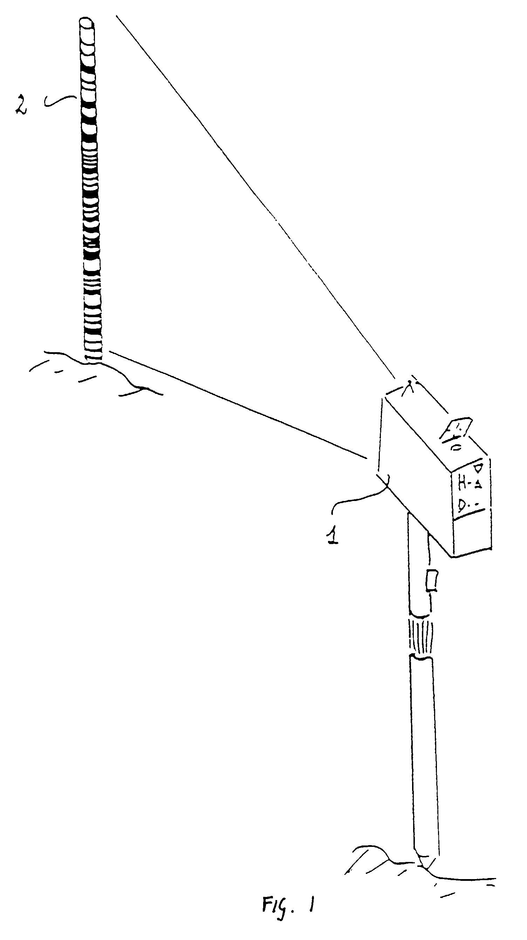

In der Zeichnung ist ein Ausführungsbeispiel der erfindungsgemäßen Meßlatte schematisch in perspektivischer Ansicht in Verbindung mit einem Video-Theodoliten dargestellt

Der in der Zeichnung dargestellte Video-Theodolit 1 kann z.B. mit unterschiedlichen Fix-Fokus-Optiken entsprechend der Patentanmeldung P 195 04 039.2 ausgestattet sein, so daß mit ihm nicht nur Höhen, sondern auch Entfernungen zur Meßlatte 2 automatisch gemessen werden können. Die Vorteile der von allen Seiten anvisierbaren neuen Meßlatte 2 werden dann insbesondere beim Ausstecken großer Bauplätze deutlich. Wenn drei dieser Meßlatten an Punkten mit bekannten Koordinaten aufgestellt werden, dann kann eine einzelne Person diese von jedem beliebigen Punkt auf dem Bauplatz mit dem Video-Theodoliten 1 anvisieren und die Koordinaten des Standortes bestimmen.

## Patentansprüche

1. Meßlatte für geodätische Meßaufgaben mit einer strichcodierten Meßteilung, dadurch gekennzeichnet, daß der Körper der Meßlatte (2) einen im wesentlichen rotationssymmetrischen Querschnitt aufweist, die Elemente der strichcodierten Meßteilung geschlossene Linien auf der Mantelfläche der Meßlatte bilden und jeweils in einer Schnittebene senkrecht zur Längsachse der Meßlatte (2) liegen.

2. Meßlatte nach Anspruch 1, dadurch gekennzeichnet, daß der Querschnitt eine Kreisfläche ist.

3. Meßlatte nach Anspruch 1, dadurch gekennzeichnet, daß der Querschnitt ein Vieleck ist.

4. Meßlatte nach einem der vorhergehenden Ansprüche, dadurch gekennzeichnet, daß der Körper der Meßlatte einen Durchmesser von vorzugsweise 6 bis 10 cm aufweist.

## Claims

1. Measuring rod for geodetic measuring tasks with a bar-coded measurement division, characterised in that the body of the measuring rod (2) has a substantially rotationally symmetrical cross-section, the elements of the bar-coded measurement division form closed lines on the circumferential surface of the measuring rod and each lie in a sectional plane perpendicular to the longitudinal axis of the measuring rod (2).

2. Measuring rod according to claim 1, characterised in that the cross-section is a circular area.

3. Measuring rod according to claim 1, characterised in that the cross-section is a polygon.

4. Measuring rod according to one of the preceding claims, characterised in that the body of the measuring rod has a diameter of preferably 6 to 10 centimetres.

## Revendications

1. Mire graduée pour mesures géodésiques avec une division de la mesure en code à barres, caractérisée en ce que le corps de la mire graduée (2) présente une section transversale essentiellement symétrique en rotation, les éléments de la gradation en code à barres forment des lignes fermées sur la surface d'enveloppe de la mire graduée et se trouvent à chaque fois dans un plan de coupe perpendiculaires à l'axe longitudinal de la mire graduée (2).

2. Mire graduée selon la revendication 1, caractérisée en ce que la succession transversale est une surface circulaire.

3. Mire graduée selon la revendication 1, caractérisée en ce que la section transversale est un polygone.

4. Mire graduée selon l'une quelconque des revendications précédentes, caractérisée en ce que le corps de la mire graduée présente un diamètre avantageusement de 6 à 10 cm.
